**Europäisches Patentamt**

**European Patent Office**

**Office européen des brevets**

(19)

(11) Publication number: · **0 127 710**
**B1**

(12) **EUROPEAN PATENT SPECIFICATION**

(45) Date of publication of patent specification: **18.05.88**

(51) Int. Cl.⁴: **A 61 C 7/00**

(21) Application number: **83303240.2**

(22) Date of filing: **03.06.83**

(54) **Integrated oral magnetic osteogenic and orthodontic appliances.**

(43) Date of publication of application:
**12.12.84 Bulletin 84/50**

(45) Publication of the grant of the patent:
**18.05.88 Bulletin 88/20**

(84) Designated Contracting States:
**AT BE CH DE FR GB IT LI LU NL SE**

(56) References cited:
**DE-A-2 753 640**
**DE-A-2 853 365**
**US-A-3 353 271**
**US-A-3 984 915**
**US-A-4 153 060**

(73) Proprietor: **MEDICAL MAGNETICS, INC.**
**79 North Franklin Turnpike**
**Ramsey, New Jersey 07446 (US)**

(72) Inventor: **Smiley, Harry**
**8 Milford Drive**
**White Plains New York 10606 (US)**
Inventor: **Blechman, Abraham**
**153 Lester Drive**
**Tappan New York 10983 (US)**

(74) Representative: **Wright, Peter David John et al**
**R.G.C. Jenkins & Co. 26 Caxton Street**
**London SW1H 0RJ (GB)**

Courier Press, Leamington Spa, England.

## Description

This invention relates to the use of magnets in appliances for the corrective treatment of dental misalignments and disease.

The invention, as will be appreciated from consideration of the following, provides forces for inducting orthodontic movement and additionally promotes soft tissue repair and osteogenesis in the upper and lower jaws. These effects are accomplished in accordance with the invention by affixing permanent magnets to the teeth so that magnetically derived corrective movement inducing forces are applied to the teeth and additionally so that low frequency changing magnetic fields are produced by mandibular movement which, in conjunction with their interaction with adjacent internal electrolytes, are therapeutically beneficial to soft tissue repair and osteogenesis. The invention finds application in enhancing therapy in periodontics and orthodontics and is totally non-invasive as opposed to the prior art methods of treatment of common periodontal disease by surgical intervention.

Magnetic orthodontic appliances are known from Blechman US Patent 3,353,271, issued November 21, 1967, which discloses an orthodontic appliance through which corrective traction is applied to teeth by magnetically generated force derived from permanent magnets mounted intraorally by arch wires and anchoring bands on the buccal sides of the teeth, the spacing between the magnets being adjusted to regulate the traction force produced.

According to the present invention, there is provided an oral osteogenic and orthodontic appliance which comprises at least a pair of permanent magnets mounted to the upper and lower jaws of a patient at one side thereof, each magnet of the pair being affixed to the teeth of one respective jaw and in close spaced relation to the other so as to establish forces between the magnets which are transmitted to the patient's teeth for inducing orthodontic movement and so that the fields of said magnets will be displaced relative to each other upon relative movement of the jaws so as to promote osteogenesis and soft tissue repair, as known from US—A—3,353,271 abovementioned, which is characterized in accordance with the invention in that a sleeve of noncorrosive and electrically conductive material peripherally continuously encases each magnet and exposes the magnet only at its poles, and each magnet is fixed within its respective sleeve to prevent movement between the magnet and the sleeve.

Other features of the present invention are set forth with particularity in the appended claims, and the invention together with features and advantages of the same will become more apparent to those possessed of the relevant skills from consideration of the following details description of exemplary embodiments which is given with reference to the accompanying drawings wherein:

Fig. 1 is a lateral view of an integrated oral magnetic osteogenic and orthodontic appliance mounted on a portion of the dentition of the upper and lower jaw of a human being, with a Class II malocclusion;

Fig. 2 is a lingual view in perspective of one of the components of the appliance in Fig. 1;

Fig. 3 is a lateral view of a magnetic orthodontic appliance mounted on a portion of the dentition of the upper and lower jaw of a human being, with Class 1 malocclusion requiring extractions;

Fig. 4 is a view similar to Fig. 2, to show a modification which is usable in the appliance of Fig. 1 and 3;

Fig. 5 is a lateral view of a magnetic orthodontic appliance mounted on a portion of the dentition of the upper and lower jaw of a human being, to demonstrate desirable attraction-force fields through shearing with a minimal air gap;

Fig. 6 is a view similar to Fig. 5 to illustrate a repulsion-force situation;

Fig. 7 demonstrates use of the invention for cross-bite correction;

Fig. 8 is a view from the aspect of Fig. 5, to illustrate another embodiment; and

Fig. 9 is a view from the aspect of Fig. 7 but applicable to the embodiment of Fig. 8.

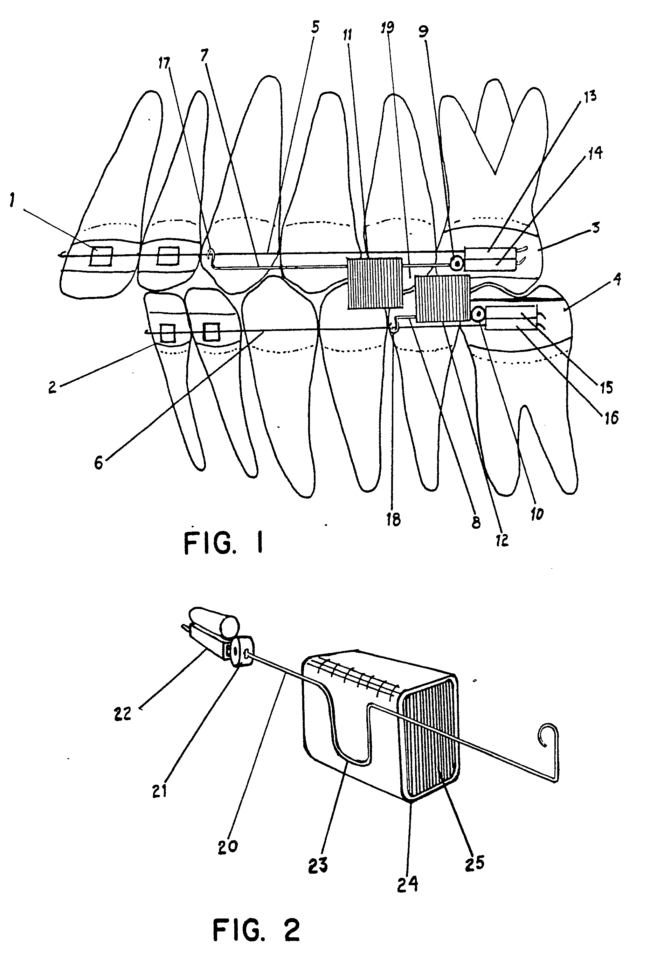

Fig. 1 of the drawings shows an orthodontic appliance mounted on a portion of the dentition of the upper and lower jaw of a human being with a Class II malocclusion. The orthodontic appliance includes upper anterior bands 1 mounted to the anterior teeth and having wire securing brackets thereon, an upper posterior band 3 mounted to an upper rear molar and having a maxillary superior molar tube 13 mounted thereon and an upper base archwire 5 connecting the brackets on the anterior bands 1 and the molar tube 13 on the posterior band. The bands and brackets are shown and described in more detail in Blechman U.S. Patent 3,353,271, issured November 21, 1967. Lower anterior bands 2 with suitable wire mounting brackets thereon are connected by a lower base archwire 6 to a mandibular inferior molar tube 16 mounted on a lower molar band 4.

An upper sectional archwire 7 independent of the main base archwire 5 is connected at one end to a maxillary inferior molar tube 14 mounted on the molar band 3 and at its other end by a hook extension 17 to the archwire 5. The archwire 7 serves as a support for a magnetic module. The magnetic module 11 includes a magnet accommodated within a sleeve. A lock 9 attached to the archwire 7 and intermediate the module 11 and the molar tube 14 permits fore-and-aft adjustment of the magnetic module 11.

A lower sectional archwire 8 independent of the archwire 6 supports a magnetic module 12 thereon. The archwire 8 is connected at one end to a mandibular superior molar tube 15 mounted on the band 4 and at the other end by a hook extension 18 of the archwire 8 to the archwire 6. A lock 10 attached to the lower archwire 8 intermediate the module 12 and the molar tube 15 permits fore-and-aft adjustement of the magnetic module 12.

The magnetic modules 11 and 12 are spaced apart end to end to provide an air gap 19 between the attractive poles of the magnets. This air gap can be adjusted by moving the modules when required to regulate the magnetic force between them. The orientation of the magnetic modules 11 and 12 can also be adjusted relative to each other by bending the archwires 7 and 8 so that the poles of the magnet can be aligned.

The archwires 7 and 8 and the passages through the molar tubes 14 and 15 which anchor the archwires 7 and 8 are preferably of rectangular cross section, for example, 0.55mm×0.71mm (.022″×.028″) to prevent buccal torquing of the magnetic modules when the archwires 7 and 8 are inserted therein, thereby permitting the poles of the magnetic modules 11 and 12 to remain properly aligned at all times so that continuous orthodontic movement will be accomplihed.

The integrated oral magnetic osteogenic and orthodontic appliance shown in Fig. 1 creates a magnetic field in the adjacent bony tissue so that mandibular movement during mastication, speech, etc. generates a low frequency changing magnetic field around and near both magnets; this varying field interacts with body cells and/or tissues, and with circulating vascular and intercellular electrolytes. Simultaneous orthodontic movement is imparted to the teeth by the magnetic force field. Normally, during tooth movement, osteoclastic activity of the alveolar bone is induced and subsequently osteogenesis must occur to insure successful orthodontic treatment. This invention accelerates the rate of osteogenesis and also stimulates osteogenesis in areas where this is necessary but may not occur. Tooth movement accelerates by the continuous application of force plus increased osteogenic activity accelerates treatment time. In addition, stimulation of osteogenesis in areas where this should occur but fails to occur prevents subsequent periodontal disease and possible early loss of teeth. Thus, this appliance can be utilized in the treatment of periodontal disease even where orthodontic requirements are not necessary.

Fig. 2 is a more detailed view of one of the magnetic modules 11 or 12 shown in Fig. 1. The magnetic module includes a permanent magnet 25 accommodated within a magnet holding sleeve 24. The sleeve 24 is non-magnetic and electrically conductive, and is preferably but not necessarily of a surgical grade stainless steel; sleeve 24 is mounted to an archwire having a hook extension at one end and a buccal tube 22 at the opposite end. The hook extension, as described above in connection with Fig. 1, is adapted to be mounted on another archwire and the buccal tube 22 is adapted to be mounted on a molar band. An orthodontic lock 21 on the archwire 20 prevents the archwire from moving relative to the tube when properly locked in place, thereby directly transmitting the magnetic force to the molar tooth.

The archwire is of rectangular cross section and is received within a rectangular passage of generally complementary shape is the tube 22. A U-shaped band 23 in the archwire facilitates attachment of the archwire to the sleeve by soldering, welding or other suitable means.

The permanent magnet is anchored in the sleeve by a bio-compatible adhesive material, such as acrylic, epoxy, urethane, or other suitable adhesive material. The exposed poles of the magnet are preferably coated with the adhesive material to prevent corrosion products from leaching into the oral cavity when SmCo, PtCo, or AlNiCo or other magnets are used.

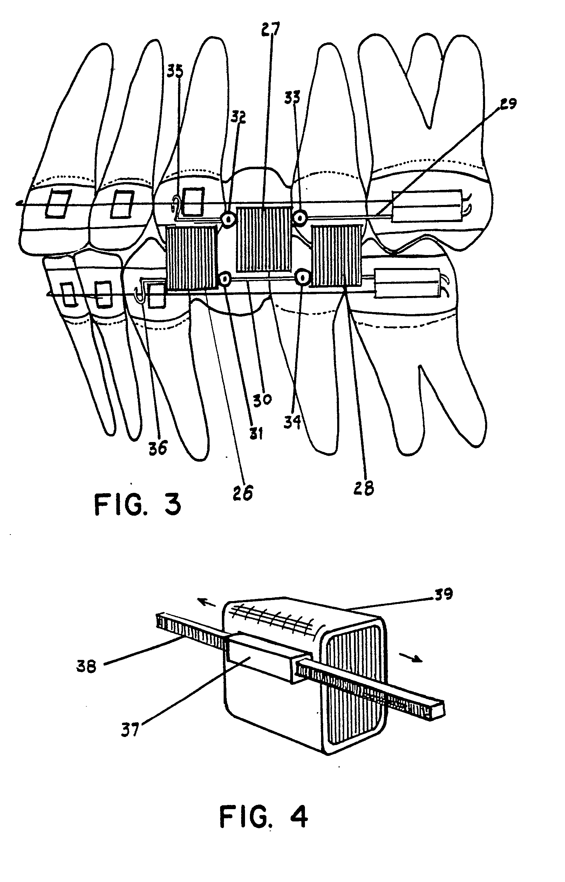

Fig. 3 of the drawings shows an orthodontic appliance of the present invention mounted on a portion of the upper and lower jaw of a human being with a Class I malocclusion requiring extractions. This appliance utilizes the basic mounting and indepenent archwires of the appliance described above in connection with Fig. 1.

More specificaly, the orthodontic appliance shown in Fig. 3 utilizes three magnetic modules 26, 27 and 28, on each side of the mouth. The middle module 27 is mounted on an upper sectional archwire 29 intermediate a pair of orthodontic locks 32 and 33. The anterior end of the archwire 29 has a hook extension 35 bent to engage the main archwire immediately mesial to a bracket mounted to the upper cuspid to be moved distally. The anterior and posterior magnetic modules 26 and 28; respectively, are mounted to a lower archwire 30, mounted at its posterior end to a lower molar and having a hook extension 36 at its anterior end bent to engage the main archwire immediately mesial to a bracket attached to the lower cuspid to be moved distally. An orthodontic lock 31 is mounted on the archwire 30 distal to the module 26 and an orthodontic lock 34 is mounted on the archwire 30 mesial to the magnetic module 28. The orthodontic locks are provided to lock the modules to the archwires but they can be released to adjust the positions of the modules and the size of the air gaps.

The modules are arranged so the distal movement of the upper and lower cuspid teeth can be accomplished simultaneously. Toward this end, the poles of the magnets are positioned so that the middle module 27 is attracted to the posterior lower module 28 to move the upper cuspid distally. At the same time, the anterior lower module 26 is attracted to the middle module 27 to move the lower cuspid distally. Concomitantly, osteogenesis is induced in the adjacent alveolar bone by mandibular movement.

As shown in Fig. 4 of the drawings, the magnetic module can be provided with a mounting means 37 to facilitate its adjustment on an archwire for adjustment of the air gap between poles of the magnets. The mounting means 37 shown in Fig. 4 is an elongate tube carried by the sleeve 39 to permit the module to be adjusted relative to a supporting archwire 38; tube 37 may be mounted anywhere on the sleeve to facilitate particular treatment. The archwire and the passage through the tubular mounting means are of complementary shape, for example, rectangular in cross section, to prevent torquing or twisting of the module on the wire while permitting the module to slide freely along the wire for adjustment. Tubes 37 of other geometric configuration (e.g., round or oval, and with or without a key slot or groove) may also be used, and properly bent archwires may be used to compensate for torquing. Magnets may be used in any repulsive, attractive or combination mode to generate the required vectors, and magnets may also be used in periodontal therapy, with shims at the air gap to limit force generation and to thus utilize to the full the osteogenic quality of the varying magnetic field.

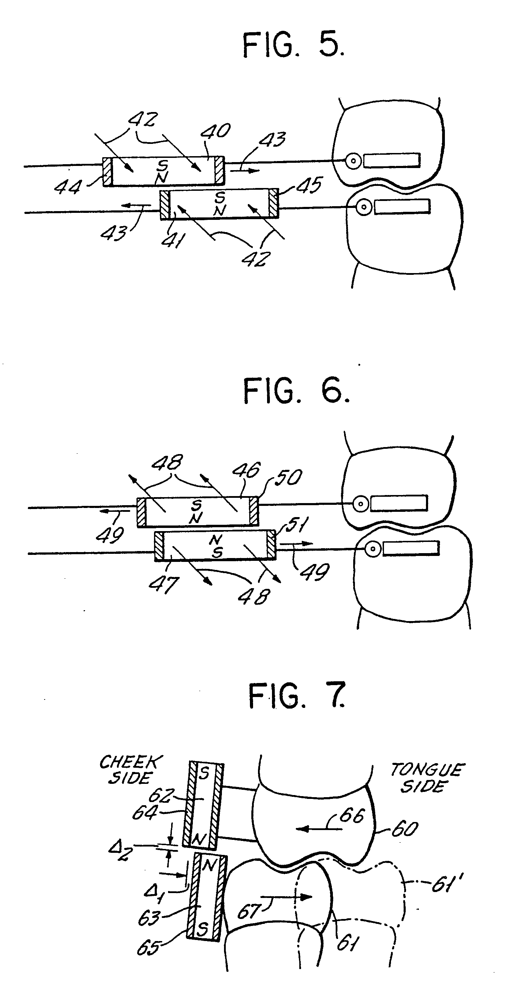

Fig. 5 shows a magnetic orthodontic appliance mounted on a portion of the dentition of the upper and lower jaw of a human being, to illustrate desirable force fields through shearing with a minimal air gap. A maxillary magnetic module 40 and a mandibular magnetic module 41 are mounted on their repective supporting archwires and in attracting polarity relation so that resultant magnetic force vectors are oriented diagonally, as indicated by slanted arrows 42. Since the magnetic poles will tend to align, the shearing effect of the horizontal component of the resultant force produces desired orthodontic forces on the archwires, as indicated by the arrows 43. Sectional cross-hatching at 44—45 will be understood to show the conductive sleeve (corresponding to sleeve 24 in Fig. 1) around each of the respective magnets 40—41. The minimal air gap eliminates friction between the poles and simultaneously generates a maximal force. Concomitantly, osteogenesis and soft tissue repair are achieved by the low frequency varying magnetic field described above.

The arrangement of Fig. 6 will be seen to be very much the same as in Fig. 5, with the exception that the polarity relation of the magnets 46—47 is reversed, to place like poles in closely spaced adjacency but, again, at horizontal offset from each other. The resultant force vectors 48 are inclined but in the repulse direction, producing a horizontal component 49 of force reaction upon the upper and lower teeth to which the respective magnets are referenced. Conductive sheaths 50—51 again surround the respective magnets.

The arrangement of Fig. 7 illustrates use of the invention in an orthodontic procedure wherein jaws which are initially at lateral offset are to be adjusted laterally to correct their alignment. The view of Fig. 7 will be understood to be taken at a transverse cut through one side of the jaws, to provide an elevational aspect on upper and lower molars 60—61, wherein the lower molar 61 on the cheek side is to be displaced from its solid-line or offset position, into its ultimately corrected tongue side position shown by dashed outline 61', using upper and lower permanent magnets 62—63, with conductive sheaths 64—65 as previously described, and oriented for mutual repulsion. The procedure for use of magnets 64—65 for the indicated purpose may involve resetting and adjusted reorientation of both magnets in the course of several weeks of periodic meetings with the patient, but for simplicity of explanation, it will be assumed that the entire procedure requires progressive adjustment of only the upper magnet 62 on its tooth (or multiple-tooth) reference mount, the other magnet 63 being in the same fixedly mounted relation to its tooth 61 (or plural adjacent teeth throughout the procedure. The procedure will also be understood to be bilateral in its application, as will later be more fully explained.

For the initial condition of misalignment shown for teeth 60—61 in Fig. 7, the problem of effecting progressive displacement from initial position 61 to desired final position 61' involves that of providing strong repulsion in the direction arrows 66—67. This is best achieved in the region $\Delta_1$ of lateral offset of like pole faces of magnets 64—65, while preserving a degree of lateral overlap of these pole faces, as shown. Also, the gap $\Delta_2$ between pole faces should be as small as possible. The problem also involves recognition of the fact that, in the course of effecting lateral displacement from 61 to 61', the patient's bite will become more limited as interference progresses between crests of the teeth 60—61.

In the foregoing circumstances, it is recommended initially to mount magnet 62 in the laterally offset relation $\Delta_1$ shown, and with pole faces in contact (or separated by a thin shim, such as a 0.02 or 0.05mm (0.001 or 0.002 inch) foil) when the jaws are fully closed. As lateral displacement occures, the lateral offset $\Delta_1$ increases (thus reducing pole-face overlap), and the teeth 60—61 interfere, causing gap $\Delta_2$ to increase, for the jaws-closed condition. Thus, at intervals, the position of magnet 62 on its mount will require readjustment, involving reduction of $\Delta_1$ to its initial small setting, and reduction of $\Delta_2$ to zero or near zero. Once the tooth (61) displacement passes the point of maximum interference with tooth 60, the successive readjustments of magnet 60 will require a larger shim (e.g., 0.005 to 0.010 inch foil) to determine a reset value of $\Delta_2$, to permit achievement of maximum jaw closure.

It has been indicated above that the procedure with respect to Fig. 7 is bilateral, to effect the indicated corrective displacement. By this it is meant that, in application to a jaw correction, another pair of magnets (not shown) will have been mounted to the cheek side of the corresponding molars at the other side of the mouth, and that repulse action should be used between the magnets of this other pair; the magnets should be mounted and adjusted as described for magnets 62—63, except that the direction of lateral-force development should of course be in the direction aiding the force 66—67 developed by reaction between magnets 62—63.

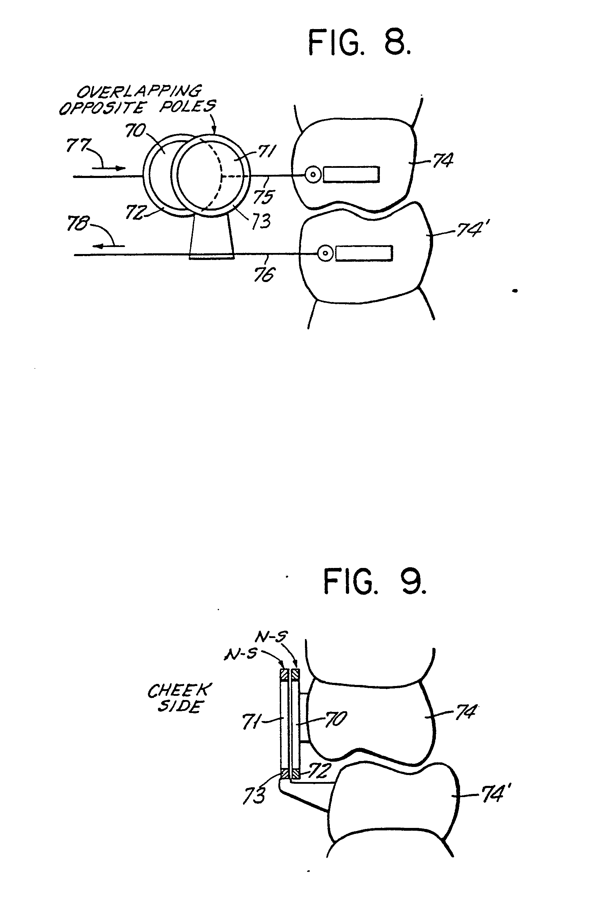

Figs. 8 and 9 illustrate an embodiment of the invention wherein permanent magnets 70—71 are relatively thin discs and wherein the conductive sheath is a circumferential ring 72 (73) around each magnet 70 (71), the opposite faces of each magnet being oppositely polarized. Assuming that it is desired to force an upper tooth 74 rearward with respect to a corresponding lower tooth 74', the discs 70 (71) are so mounted to archwires 75 (76) referenced to the respective teeth, and the polarity orientation of the partially overlapping discs is so selected that, for the jaw-closed condition, the adjacent poles of the magnetized discs react in the directions shown by arrows 77 (78). For the arrangement shown, opposite poles are adjacent, so that the magnets seek a greater degree of overlapping registration, as seen from the aspect of Fig. 8. As seen in Fig. 9, the discs 70—71 are in close laterally spaced relation, primarily at the elevation of the upper-jaw tooth 74, and are both on the cheek side of the tooth. For the closed condition of the mouth, there is constant application of force in the direction of arrows 77 (78); and when the jaws are opened and closed, the forces become intensity-modulated in the direction of arrows 77 (78), while the magnetic flux in the tooth and gum region adjacent the upper magnet 70 is subjected to relatively great excursions of intensity, by reason of jaw articulation, thus accounting for induced therapeutically beneficial currents in body cells within the involved region.

It is found that orthodontic correctional procedures are very materially aided by the invention. This is believed to be attributable to the fact that the reacting magnets are always acting; they are always acting with greatest force for the jaw-closed condition; and the greatest change in magnetic flux development also occurs at and near the jaw-closed condition, for greatest coupling to body cells and/or tissues, and therefore of greatest osteogenic effect when the orthodontic correction force is at or near maximum.

As will be appreciated by those possessed of the relevant skills from reading the foregoing, the present invention possesses the following advantages:

1. Intermaxially and intramaxially force applications are not dependent on patient cooperation. All forces are determined and controlled by the operator.

2. The invention enables totally independent mounting of any type of standard orthodontic appliance in use, possessing greater flexibility and eliminating interference.

3. The invention enables the maximum effect of a continuous force field to be obtained thereby providing optimal conditions necessary for tooth movement by preventing buccal torquing of the magnetic sleeve module in some of the described embodiments wherein rectangular orthodontic tube or alternative geometric configurations which will resist buccal torquing of the entire magnetic sleeve module are employed, the tube being soldered or otherwise suitably connected to the sleeve.

4. The invention provides a bio-compatible sleeve to enclose and protect each magnet.

5. When needed or desirable, proper preparation of the magnets will induce torquing of one magnet when its attractive pole is brought into proximity with another magnet. These magnets mounted in accordance with this principle, in this invention, are used in orthodontic therapy where torquing of the teeth is required.

6. The invention makes possible the use of a force that increases in value as time progresses, i.e., as the magnetic poles approach each other. Safer physiologic responses, fewer and painless orthodontic adjustments, and drastically decreased treatment time are attributed to this unique quality of the force.

7. All other non-magnetic orthodontic force systems when used in an intermaxillary mode demonstrate large vertical force vectors which tend to unseat bands and increase the cant of the occlusal plane, leading to relapse of treatment. In contrast, with the invention, magnetic inter-maxillary forces are essentially horizontal, thus providing a desirable response, hitherto unttainable with conventional forces and techniques.

8. The invention provides for alternative configurations of the magnets and can utilize magnets with fields so oriented that, when their attractive poles are not perfectly aligned in contact, a sliding or shearing force is produced with a minimal air gap between the poles. When reversed and used in repulsion, intrusion and cross-bite correction may be accomplished singly or in combination; in combination, this is the first time ever possible.

**Claims**

1. An oral osteogenic and orthodontic appliance which comprises at least a pair of permanent magnets (11,12; 26,27,28; 40,41; 46,47; 62,63; 70,71;) adapted to be mounted to the upper and lower jaws of a patient at one side thereof, each magnet of the pair being affixable to the teeth of one respective jaw and in close spaced relation to the other so as to establish forces between the magnets which are transmitted to the patient's teeth for inducing orthodontic movement and so that the fields of said magnets will be displaced relative to each other upon relative movement of the jaws so as to promote osteogenesis and soft tissue repair, characterized in that a sleeve (24; 44,45; 50,51; 64,65; 72,73;) of noncorrosive and electrically conductive material peripherally continuously encases each magnet and exposes the magnet only at its poles, and each magnet is fixed within its respective sleeve to prevent movement between the magnet and the sleeve.

2. The appliance of claim 1, in which each sleeve includes means for mounting the sleeve to an archwire to secure it in place to prevent buccal torsion.

3. The appliance of claim 2, in which the mounting means includes an elongate tube (37) mounted on each sleeve (39) and receiving a supporting arch bar (38).

4. The appliance of claim 3, in which each mounting tube (37) has a non-circular passage therethrough and receives a supporting arch bar (38) of complementary shape to avoid magnet rotation about its arch bar and to assure alignment of co-acting poles of the respective magnets.

5. The appliance of any preceding claim, in which each said magnet is provided with a thin, strong coating of biocompatible material on the poles thereof for protecting the magnet from damage due to oxidation and for protecting the oral cavity from potentially toxic corrosion products of the magnet.

6. The appliance of claim 5 wherein said thin strong coating of biocompatible material also extends between each magnet and its respective sleeve for fixing the two together.

7. The appliance of any preceding claim, in which the sleeve of each magnet is formed of stainless steel.

8. The appliance of any preceding claim, in which each permanent magnet is formed of SmCo.

9. The appliance of any of claims 1 to 7, in which each permanent magnet is formed of PtCo.

10. The appliance of any preceding claim wherein two said magnets (11,12; 27,28) are provided, said magnets being anterior and posterior magnets, and wherein main maxillary and mandibular archwires (5,6) are provided and magnet-supporting maxillary and mandibular archwires (7,8; 29,30) are provided which are offset from the main archwires (5,6) in a direction toward each other, each magnet-supporting archwire (7,8; 29,30) supporting one of the two magnets with the two magnets arranged in spaced apart relationship with an air gap therebetween each magnet-supporting archwire (7,8; 29,30) being connectable at one end to a posterior tooth and being supported at the other end by the respective main archwire (5,6).

11. The appliance of claim 10, wherein a third said magnet (26) is spaced apart on the same magnet-supporting archwire (30) which supports the posterior magnet (28) so as to accommodate the anterior magnet (27) supported by the other magnet-supporting archwire (29) therebetween.

12. The appliance of claim 10 or 11, wherein means (13,14,15,16) are provided for connecting the anterior end of each archwire to an anterior tooth so as to apply corrective forces to both maxillary and mandibular anterior teeth.

13. The appliance of any preceding claim wherein means are provided whereby said magnets (62,63) are arranged out of axial alignment so as to impart a rotational force between the magnets for producing a corrective torquing action on a respective tooth.

14. The appliance of any preceding claim, wherein said magnets are bar magnets, (62,63) and each said sleeve (64,65) is sufficiently elongate as to extend substantially entirely between the poles of its respective magnet.

15. The appliance of any of claims 1 to 12, wherein each of said magnets is a disc (70,71) with its faces oppositely polarized, and each said sleeve (72,73) is a circumferential ring of conductive material around and carried by its respective disc.

## Patentansprüche

1. Orale osteogene und orthodontische Vorrichtung, die zumindest ein Paar von Permanentmagneten (11, 12; 26, 27, 28; 40, 41; 46, 47; 62, 63; 70, 71) aufweist, die dafür ausgelegt sind, am Ober- und Unterkiefer ienes Patienten auf einer Seite davon angebracht zu werden, wobei jeder Magnet des Paars an den Zähnen jeweils eines Kiefers und in geringem Abstand zu dem anderen anbringbar ist, um zwischen den Magneten Kräfte aufzubauen, die auf die Zähne des Patienten zum Induzieren einer orthodontischen Bewegung übertragen werden, und so daß die Felder dieser Magneten bei einer Relativbewegung der Kiefer relativ zueinander versetzt werden, um Osteogenes und Weichgewebereparatur zu unterstützen dadurch gekennzeichnet, daß eine Hülse (24; 44, 45; 50, 51; 64, 65; 72, 73) aus korrosionsbeständigem und elektrisch leitfähigem Material umfangsmäßig zusammenhängend jeden Magneten umschließt und den Magneten nur an seinen Polen freilegt, und daß jeder Magnet in seiner jeweiligen Hülse befestigt ist, um eine Bewegung zwischen dem Magneten und der Hülse zu verhindern.

2. Vorrichtung nach Anspruch 1, in der jede Hülse eine Einrichtung für die Montage der Hülse an einem Bogendraht enthält, um sie zur Verhinderung einer Munddrehung an der Stelle zu sichern.

3. Vorrichtung nach Anspruch 2, in der die Montageeinrichtung eine längliche Röhre (37) enthält, die an jeder Hülse (39) angebracht ist und eine tragende Bogenstange (38) aufnimmt.

4. Vorrichtung nach Anspruch 3, in der jede Montageröhre (37) einen nicht-kreisförmigen Durchtritt hat und eine tragende Bogenstange (38) komplementärer Form aufnimmt, um eine Magnetdrehung um seine Bogenstange zu verhindern und eine Ausrichtung von zusammenwirkenden Polen der entsprechenden Magneten sicherzustellen.

5. Vorrichtung nach einem der vorhergehenden Ansprüche, in der jeder genannte Magnet mit einer dünnen, festen Beschichtung aus bioverträglichem Material auf seinen Polen versehen ist, um den Magneten gegen Beschädigung aufgrund von Oxidation zu schützen, und um die Mundhöhle gegen potentiell giftige Korrosionsprodukte des Magneten zu schützen.

6. Vorrichtung nach Anspruch 5, wobei die dünne feste Beschichtung aus bioverträglichem Material auch zwischen jeden Magneten und seine jeweilige Hülse verläuft, um die beiden aneinander zu befestigen.

7. Vorrichtung nach einem der vorhergehenden Ansprüche, in der die Hülse jedes Magneten aus rostfreiem Stahl gebildet ist.

8. Vorrichtung nach einem der vorhergehenden Ansprüche, in der jeder Permanentmagnet aus SmCo gebildet ist.

9. Vorrichtung nach einem der Ansprüche 1 bis 7, in der jeder Permanentmagnet aus PtCo gebildet ist.

10. Vorrichtung nach einem der vorhergehenden Ansprüche, wobei zwei genannte Magnete (11, 12; 27, 28) vorgesehen sind, welche Magnete vordere und hintere Magnete sind, und wobei Haupt-Oberkiefer- und -Unterkiefer-Bogendrähte (5, 6) vorgesehen sind, sowie Magnet-tragende Oberkiefer- und Unterkiefer-Bogendrähte (7, 8; 29, 30) vorgesehen sind, die gegen die Haupt-Bogendrähte (5, 6) in Richtung aufeinander zu versetzt sind, wobei jeder Magnet-tragende Bogendraht (7, 8; 29, 30) einen der zwei Magneten trägt, während die zwei Magnete in gegenseitigem Abstand mit einem dazwischenliegenden Luftspalt angeordnet sind, wobei jeder Magnet-tragende Bogendraht (7, 8; 29, 30) an einem Ende mit einem hinteren Zahn verbindbar ist und an dem anderen Ende durch den jeweiligen Haupt-Bogendraht (5, 6) gehalten wird.

11. Vorrichtung nach Anspruch 10, wobei ein dritter genannter Magnet (26) mit einem Abstand auf demselben Magnet-tragenden Bogendraht (30) angeordnet ist, der den hinteren Magneten (28) trägt, um den von dem anderen Magnet-tragenden Bogendraht (29) getragenen vorderen Magneten (27) dazwischen aufzunehmen.

12. Vorrichtung nach Anspruch 10 oder 11, wobei eine Einrichtung (13, 14, 15, 16) zum Verbinden des vorderen Endes eines jeden Bogendrahts mit einem vorderen Zahn vorgesehen ist, um Korrekturkräfte sowohl auf die Oberkiefer- als auch auf die Unterkiefer-Vorderzähne aufzubringen.

13. Vorrichtung nach einem der vorhergehenden Ansprüche, wobei Einrichtungen vorgesehen sind, durch die die Magnete (62, 63) außerhalb der axialen Ausrichtung angeordnet werden, um eine Drehkraft zwischen den Magneten aufzubringen, um eine korrigierende Drehkraftwirkung auf einen entsprechenden Zahn zu erzeugen.

14. Vorrichtung nach einem der vorhergehenden Ansprüche, wobei die genannten Magnete Stabmagnete (62, 63) sind, und wobei jede Hülse (64, 65) hinreichend lang ist, um im wesentlichen vollständig zwischen den Polen ihres entsprechenden Magneten zu verlaufen.

15. Vorrichtung nach einem der Ansprüche 1 bis 12, wobei jeder der Magneten eine Scheibe (70, 71) ist, deren Flächen entgegengesetzt polarisiert sind, und wobei jede Hülse (72, 73) ein Umfangsring aus leitfähigem Material ist, der um die entsprechende Scheibe herum verläuft und von dieser getragen wird.

## Revendications

1. Dispositif oral ostéogénique et orthodontique qui comporte au moins une paire d'aimants permanents (11, 12; 26, 27, 28; 40, 41; 46, 47; 62, 63; 70, 71) prévus pour être montés sur la mâchoire supérieure et la mâchoire inférieure d'un patient, de l'un de leur côté, chaque aimant de la paire pouvant être fixé sur les dents de l'une des mâchoires respectives et très près l'un de l'autre, de façon à établir entre les aimants des forces qui sont transmises aux dents du patient pour induire une migration orthodontique et de façon que les champs desdits aimants se déplacent l'un par rapport à l'autre lors d'un mouvement relatif des mâchoires, de façon à favoriser l'ostéogénèse et la réparation du tissue mou, caractérisé en ce qu'un fourreau (24; 44, 45; 50, 51; 64, 65; 72, 73) de matériau noncorrosif et électriquement conducteur enveloppe en continu, sur la périphérie, chaque aimant et ne laisse apparaître l'aimant qu'à ses pôles; et en ce que chaque aimant est fixé dans son fourreau respectif pour éviter un mouvement entre l'aimant et le fourreau.

2. Dispositif selon la revendication 1, dans lequel chaque fourreau comporte un moyen pour monter le fourreau sur un fil en arc pour l'immobiliser afin d'éviter toute torsion buccale.

3. Dispositif selon la revendication 2, dans lequel le moyen de montage comprend un tube de form allongée (37) monté sur chaque fourreau (39) et recevant une tringle en arc support (38).

4. Dispositif selon la revendication 3, dans lequel chaque tube de montage (37) présente un passage traversant non-circulaire et reçoit une tringle en arc support (38) de forme complémentaire pour éviter toute rotation de l'aimant autour de sa tringle en arc et pour assurer l'alignement des pôles collaborants des aimants respectifs.

5. Dispositif selon une quelconque des revendications précédentes, dans lequel chacun desdits aimants présente sur ses pôles un revêtement fin et fort de matériau biocompatible pour protéger l'aimant des dommages dues à l'oxydation et pour protéger la cavité orale des produits éventuellement toxiques de la corrosion de l'aimant.

6. Dispositif selon la revendication 5, dans lequel ledit revêtement fin et fort de matériau biocompatible s'étend également entre chaque aimant et son fourreau respectif pour fixer ensemble l'un et l'autre.

7. Dispositif selon l'une quelconque des revendications précédentes, dans lequel le fourreau de chaque aimant est en acier inoxydable.

8. Dispositif selon l'une quelconque des revendications précédentes, dans lequel chaque aimant permanent est en SmCo.

9. Dispositif selon l'une quelconque des revendications 1 à 7, dans lequel chaque aimant permanent est en PtCo.

10. Dispositif selon l'une quelconque des revendications précédentes, dans lequel il est prévu deux aimants (11, 12; 27, 28), lesdits aimants étant l'aimant antérieur et l'aimant postérieur, et dans lequel il est prévu des fils principaux en arc maxillaire et mandibulaire (5, 6) et des fils en arc maxillaire et mandibulaire, support d'un aimant (7, 8; 29, 30) qui sont décalés par rapport aux fils principaux en arc (5, 6), selon la direction qui va de l'un à l'autre, chaque fil en arc support d'un aimant (7, 8; 29, 30) supportant l'un des deux aimants, les deux aimants étant disposés à une certaine distance l'un de l'autre avec jeu entre l'un et l'autre, chaque fil en arc support d'un aimant (7, 8; 29, 30) pouvant être relié, à l'une de ses extrémités, à une dent postérieure et étant supporté, à son autre extrémité, par le fil principal en arc respectif (5, 6).

11. Dispositif selon la figure 10, dans lequel un troisième aimant (26) est disposé à une certaine distance sur le même fil en arc (30) support d'aimant qui support l'aimant postérieur (28), de façon à loger entre eux l'aimant antérieur (27) supporté par l'autre fil en arc (29) support d'aimant.

12. Dispositif selon la revendication 10 ou 11, dans lequel des moyens (13, 14, 15, 16) sont prévus pour relier l'extrémité antérieure de chaque fil en arc à une dent antérieure de façon à appliquer les forces correctives aux deux dents antérieures maxillaire et mandibulaire.

13. Dispositif selon l'une quelconque des revendications précédentes, dans lequel sont prévus des moyens par lesquels lesdits aimants (62, 63) sont disposés hors alignement axial, de façon à créer une force de rotation entre les aimants pour produire une action corrective de torsion sur une dent respective.

14. Dispositif selon l'une quelconque des revendications précédentes, dans lequel lesdits aimants sont des aimants du type barreau (62, 63) et dans lequel chacun desdits fourreaux (64, 65) est suffisamment allongé pour s'étendre sensiblement entièrement entre les pôles de son aimant respectif.

15. Dispositif selon l'une quelconque des revendications 1 à 12, dans lequel chacun desdits aimants est un disque (70, 71) dont les faces sont de polarité opposée et dans lequel chacun desdits fourreaux (72, 73) est une bague circonférentielle de matériau conducteur autour de son disque respectif et portée par ce disque.

FIG. 1

FIG. 2

FIG. 3

FIG. 4

# FIG. 5.

# FIG. 6.

# FIG. 7.

# FIG. 8.

OVERLAPPING
OPPOSITE POLES

77

70

71

74

72

75

78

73

76

74'

# FIG. 9.

N-S

N-S

CHEEK
SIDE

71

70

74

72

73

74'